**Europäisches Patentamt**

**European Patent Office**

**Office européen des brevets**

(19)

(11) Veröffentlichungsnummer: **0 243 882**
**B1**

(12) **EUROPÄISCHE PATENTSCHRIFT**

(45) Veröffentlichungstag der Patentschrift: **23.01.91**

(21) Anmeldenummer: **87105965.5**

(22) Anmeldetag: **23.04.87**

(51) Int. Cl.⁵: **D 07 B 7/14, F 16 H 55/22,
F 16 H 1/16**

(54) **Verfahren zum Anbringen einer reibungs- und geräuschmindernden Zwischenlage auf einem Steigungskabel.**

(30) Priorität: **26.04.86 DE 3614241**

(43) Veröffentlichungstag der Anmeldung:
**04.11.87 Patentblatt 87/45**

(45) Bekanntmachung des Hinweises auf die
Patenterteilung:
**23.01.91 Patentblatt 91/04**

(84) Benannte Vertragsstaaten:
**ES FR GB IT NL SE**

(56) Entgegenhaltungen:
**DE-A-3 513 093**

(73) Patentinhaber: **Gesellschaft für
Steuerungstechnik mbH & Co.
Am Bahnhof
D-6332 Ehringshausen (DE)**

(72) Erfinder: **Burghardt, Franz
Bachstrasse 35
D-6334 Asslar (DE)**

## Beschreibung

Die Erfindung betrifft ein Verfahren zum Anbringen einer reibungs- und geräuschmindernden Zwischenlage auf einem aus Drahtkabel mit Steigungswendel bestehenden Steigungskabel, bei dem zwischen die Windungen des Steigungskabels ein beflockter Faden bzw. Band eingewickelt wird.

In der DE-OS 35 13 093.8 wurde bereits vorgeschlagen, den beflockten Faden zwischen den Steigungswendeln anzukleben, d.h. zunächst eine Kleberschicht zwischen den Wendeln aufzubringen und den Faden auf diesen Kleber zu wickeln.

In der Praxis hat sich diese Art der Befestigung als nachteilig erwiesen, weil es sehr schwer ist, die Klebermenge richtig zu dosieren. Wird zuviel Kleber aufgetragen, so steigt der Kleber zwischen den Wendeln nach oben und verhärtet die Beflockung, die vom Faden getragen wird. Wird dagegen zu wenig Kleber aufgetragen, so besteht die Gefahr, daß sich der Faden löst und abwickelt.

Der Erfindung liegt die Aufgabe zugrunde, ein Befestigungsverfahren anzugeben, das diese Nachteile nicht aufweist.

Diese Aufgabe ist dadurch gelöst, daß ein beflockter Faden aus thermoplastischem Kunststoff verwenden wird, daß das Steigungskabel auf eine Temperatur erwärmt wird, die jenseits des Schmelzpunktes dieses Kunststoffes liegt, und daß der beflockte Faden derart zwischen die erwärmten Steigungswendel gewickelt wird, daß die Flocken bzw. Härchen anschmelzen und an dem Metall ankleben.

## Patentanspruch

Verfahren zum Anbringen einer reibungs- und geräuschmindernden Zwischenlage auf einem aus Drahtkabel mit Steigungswendel bestehenden Steigungskabel, bei dem zwischen die Windungen des Steigungskabels ein beflockter Faden bzw. Band eingewickelt wird, dadurch gekennzeichnet, daß der beflockte Faden aus einem thermoplastischen Kunststoff besteht und das Steigungskabel auf eine Temperatur erwärmt wird, die jenseits des Schmelzpunktes des Kunststoffes liegt, und daß der beflockte Faden derart zwischen die erwärmten Steigungswendel gewickelt wird, daß die Flocken bzw. Härchen anschmelzen und an dem Metall ankleben.

## Revendication

Procédé pour apporter une couche intermédiaire destinée à réduire la friction et le bruit sur un câble à rampe constitué par un câble métallique comportant une rampe à spirale, dans lequel un fil floqué ou un ruban est enroulé entre les spires du câble à rampe, caractérisé par le fait que le fil floqué est composé d'une matière synthétique thermoplastique, que le câble à rampe est échauffé à une température située au-delà du point de fusion de cette matière synthétique, et que le fil floqué est enroulé entre les spirales de la rampe échauffée de telle sorte que les flocons ou poils fondent et adhérent au métal.

## Claim

Method for the application of an intermediate layer, which reduces noise and friction, on a pitch cable, which consists of a wire cable with a helical thread and in which a flock-covered thread or tape is wound in between the turns of the pitch cable, characterised thereby, that the flock-covered thread consists of a thermoplastic synthetic material and the pitch cable is heated to a temperature which lies beyond that of the melting point of the synthetic material and that the flock-covered thread is wound in such a manner between the heated helical threads that the flocks or tiny hairs start to melt and adhere to the metal.